# EUROPÄISCHE PATENTANMELDUNG

(11) **EP 2 045 544 A2**
(43) Veröffentlichungstag der Anmeldung: **08.04.2009**
(21) Anmeldenummer: 08165158.0
(22) Anmeldetag: 25.09.2008
(51) Int. Cl.: F24J 2/20

(54) **Wärmetauscher, insbesondere Absorber für thermische Solarkollektoren**

(30) Priorität: 01.10.2007 DE 102007047110
(71) Anmelder: Citrin Solar GmbH, 85358 Moosburg (DE); Fachhochschule Ingolstadt, 85049 Ingolstadt (DE)
(72) Erfinder: Treikauskas, Franz-Dominik, 84558, Tyrlaching (DE); Zörner, Prof. Dr. Ing.Wilfried, 85258, Weichs (DE)
(74) Vertreter: Gustorf, Gerhard

(57) **Zusammenfassung**

1. Wärmetauscher, insbesondere Absorber für thermische Solarkollektoren.
2. Der als Absorber für thermische Solarkollektoren verwendbare Wärmetauscher hat einen in Kanäle unterteilten Hohlraum, die von einem Wärmeträger durchströmt werden. Er hat in seiner mittleren Zone (10) eine Vielzahl paralleler Steigkanäle (12) mit nahezu gleichen Durchströmquerschnitten, die in einem Endbereich des Hohlraums mit einer Einlaßstruktur (14) und im gegenüberliegenden Endbereich des Hohlraums und einer Auslaßstruktur (16) verbunden sind. Sowohl die Einlaßstruktur (14) als auch die Auslaßstruktur (16) bestehen aus zueinander parallelen, zu den Steigkanälen (12) rechtwinklig verlaufenden Strömungskanälen (18), die durch quer dazu verlaufende Brückenkanäle (20) miteinander verbunden sind.

## Beschreibung

Die Erfindung betrifft einen Wärmetauscher, insbesondere Absorber für thermische Solarkollektoren nach dem Oberbegriff des Patentanspruchs 1.

Zur Umwandlung von Sonnenenergie in nutzbare Wärmeenergie dienen Solarkollektoren, die mit einem als Wärmetauscher wirkenden Absorber ausgerüstet sind. An der Oberfläche des Absorbers wird ein Teil der auftreffenden Strahlungsenergie der Sonne in Wärme umgewandelt und an einen Wärmeträger (Luft, Wasser oder eine frostsichere Flüssigkeit) übertragen, der durch das Kanalsystem des Absorbers strömt.

In ihrer einfachsten Konstruktion bestehen derartige Absorber aus Rohren, die auf eine Deckplatte gelötet sind. Wenn durch die Verbraucher, z. B. Pufferspeicher, keine Wärmeaufnhame mehr erfolgt, dann wird der Kollektorkreis abgeschaltet und der Wärmeträger nicht mehr umgewälzt. Ein Nachteil dieser Konstruktion besteht nun darin, daß bei der nicht mehr möglichen Wärmeabfuhr der entstehende Wärmestau das Lot beeinträchtigt und damit die Festigkeit der Verbindung verringert. Außerdem ist aufgrund des linienförmigen Kontaktes zwischen den Rohren und der Deckplatte als Strahlungsempfänger die Wärmeleitung nur sehr unzureichend. Wenn zur Lösung dieses Problems der Rohrabstand minimiert wird, hat dies eine erhebliche Kostensteigerung zur Folge. Nicht zuletzt ist bei diesen Blech-Rohr-Absorbern die Fertigung qualitativ schwierig und aufwendig, da für eine ununterbrochen durchgängige Schweißverbindung gesorgt werden muss, was bei Laserschweißen und Ultraschallschweißen nur mit hohem Aufwand bezüglich Fertigungs- und Einstellparametern gelingt.

Zur Lösung der angesprochenen Probleme wurden bereits Ende der 70er und Anfang der 80er Jahre alternative Absorberbauformen entwickelt und auch unterschiedlichste Fertigungsverfahren erprobt. Diese Entwicklung führte zu sogenannten volumetrischen Absorbern, bei denen auf Grund einer flächigen Wärmeübertragung der thermische Wirkungsgrad verbessert wird. Weitere Vorteile bestehen darin, dass eine gleichmäßige Wärmeabfuhr über nahezu die gesamte Absorberfläche gewährleistet wird und ohne materiellen Mehraufwand mehrere Steigkanäle hergestellt werden können.

Aus der AT 37 776 ist ein volumetrischer Absorber der eingangs genannten Gattung bekannt, der nach der Roll-Bond-Technik hergestellt ist. Bei diesem Verfahren werden die beiden Platten des Absorbers durch Walzendruck miteinander verbunden, wobei die Festigkeit der Verbindung zusätzlich durch eine Temperatureinwirkung oder durch Verklebung erzielt werden kann. Fertigungsbedingt sind bei diesem bekannten Wärmetauscher zwischen den parallelen Steigkanälen verhältnismäßig große Inseln vorhanden, die die effektive Wärmeübertragungsfläche verringern. Hinzu kommt, dass am Übergang der Steigkanäle in den Einlaßkanal und in den Auslaßkanal Toträume nicht vermieden werden können, die eine ungleichförmige Durchströmung zur Folge haben.

Der Erfindung liegt die Aufgabe zugrunde, einen volumetrischen Wärmetauscher der angegebenen Gattung zur Verfügung zu stellen, bei dem die Steigkanäle gleichmäßig durchströmt werden und dessen Inseln zwischen den Kanälen so klein wie möglich sind, um die wirksame Absorberfläche zu maximieren.

Gemäß der Erfindung wird diese Aufgabe dadurch gelöst, dass eine Vielzahl paralleler Steigkanäle mit nahezu gleichen Durchströmquerschnitten in einem Endbereich des Hohlraums mit einer Einlaßstruktur und in dem gegenüberliegenden Endbereich des Hohlraums mit einer Auslaßstruktur verbunden ist, wobei sowohl die Einlaßstruktur als auch die Auslaßstruktur aus zueinander parallelen, zu den Steigkanälen rechtwinklig verlaufenden Strömungskanälen besteht, die durch quer dazu verlaufende Brückenkanäle miteinander verbunden sind. Dabei ist es vorteilhaft, wenn die Einlaßstruktur und die Auslaßstruktur punktsymmetrisch zueinander ausgebildet sind.

In Weiterbildung der Erfindung sind sowohl die Einlaßstruktur als auch die Auslaßstruktur in mehrere Zonen unterteilt, die in Strömungsrichtung aufeinander folgen, wobei jede Zone gegenüber der anschließenden Zone eine andere Kanalgeometrie hat.

Mit der Erfindung ist es möglich, aufgrund der zahlreichen Steigkanäle und der gewählten Kanalgeometrie in der Einlaßstruktur und in der Auslaßstruktur eine gleichmäßige Durchströmung der Steigkanäle ohne Toträume zu erreichen. Die Inseln zwischen den Kanälen können dabei so klein wie möglich gehalten werden, um die wirksame Absorberfläche zu optimieren.

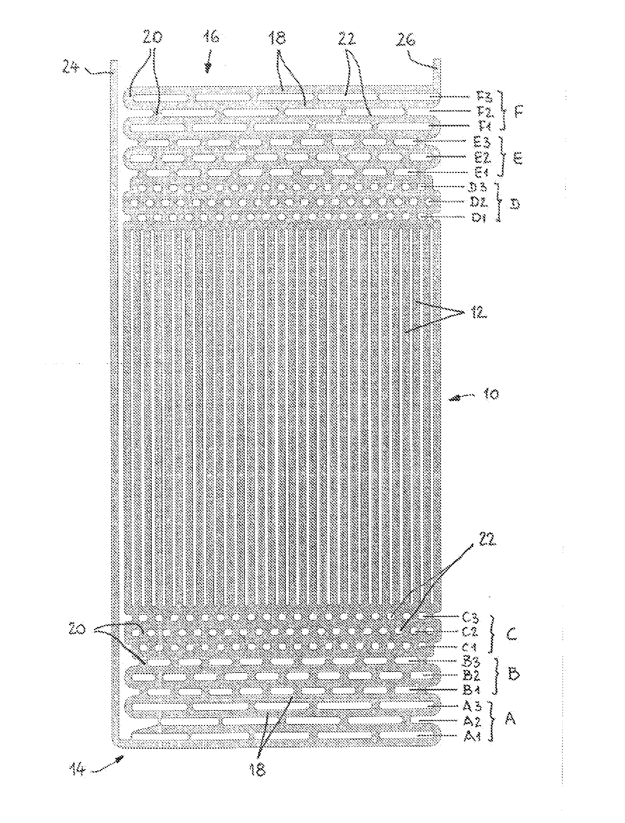

Weitere Merkmale und Vorteile der Erfindung ergeben sich aus den Patentansprüchen und aus der folgenden Beschreibung eines Ausführungsbeispiels, das in der Zeichnung dargestellt ist. Diese zeigt in Draufsicht die Gesamtkanalgeometrie eines erfindungsgemäß ausgebildeten volumetrischen Absorbers ohne das seinen Hohlraum einschließende Gehäuse. Dieses kann aus Kunststoff oder Metall bestehen, wobei im letzteren Fall zwei Platten im Roll-Bond-Verfahren miteinander verbunden sein können.

Bei dem Absorber gemäß der Erfindung besteht die mittlere Zone 10 aus einer Vielzahl paralleler Steigkanäle 12, im Ausführungsbeispiel aus 31 Steigkanälen, von denen die 29 mittleren Kanäle 12 einen konstanten Durchströmquerschnitt haben, während die beiden äußeren Steigkanäle 12 einen anderen, vorzugsweise größeren Durchströmquerschnitt haben. Die in der Figur unteren Enden der Steigkanäle 12 sind mit einer Einlaßstruktur 14 verbunden, der am gegenüberliegenden Ende eine Auslaßstruktur 16 entspricht. Sowohl die Einlaßstruktur 14 als auch die Auslaßstruktur 16 bestehen aus zueinander parallelen Strömungskanälen 18, die rechtwinklig zu den Steigkanälen 12 verlaufen und die durch quer dazu verlaufende Brückenkanäle 20 miteinander verbunden sind.

Im dargestellten Ausführungsbeispiel sind sowohl die Einlaßstruktur 14 als auch die Auslaßstruktur 16 in drei Zonen A, B, C beziehungsweise D, E, F unterteilt, wobei jede Zone drei durch die Brückenkanäle 20 definierte Ebenen A1, A2, A3 bzw. B1, B2, B3 bzw. C1, C2, C3 hat; die entsprechenden Ebenen in der Auslaßstruktur 16 sind mit D1, D2, D3 bzw. E1, E2, E3 bzw. F1, F2, F3 gekennzeichnet. Die Ebenen verlaufen mittig durch Inseln 22, die nicht von dem Wärmeträger durchströmt werden und zwischen den quer verlaufenden Strömungskanälen 18 und den diese verbindenden Brückenkanälen 20 liegen.

Für den Zulauf des flüssigen Wärmeträgers dient ein parallel zu den Steigkanälen 12 angeordneter Verteilkanal 24, der in den äußersten Strömungskanal 18 der Einlaßstruktur 14 mündet, während der äußerste Strömungskanal 18 der Auslaßstruktur 16 in einen Sammelkanal 26 mündet, über den der durch die thermische Strahlung erwärmte Wärmeträger zu einem Verbraucher abgeführt wird.

Wie die Figur weiter zeigt, sind die Einlaßstruktur 14 und die Auslaßstruktur 16 mit ihrer Kanalgeometrie punktsymmetrisch zueinander ausgebildet. Dabei sind die drei Strömungskanäle 18 der ersten Zone A der Einlaßstruktur 14 und die drei Strömungskanäle 18 der letzten Zone F der Auslaßstruktur 16 durch die geringste Zahl von Brückenkanälen 20 miteinander verbunden, deren Zahl in der ersten Ebene A1 und in der dritten Ebene A3 gleich ist, nämlich 6, während sie in der mittleren Ebene A2 5 beträgt. Entsprechendes gilt für die Brückenkanalzahlfolge (6, 5, 6) in der letzten Zone F der Auslaßstruktur.

Die jeweils mittlere Zone B bzw. E der Einlaßstruktur 14 bzw. der Auslaßstruktur 16 hat eine Brückenkanalzahlfolge von 10, 11, 10. Die beiden Zonen C und D, die einen Anschluss an die Steigkanäle 12 der mittleren Zone 10 bilden, haben eine Brückenkanalzahlfolge von 20, 21, 20.

Gemäß der Erfindung ist ferner vorgesehen, daß der Durchströmquerschnitt der Brückenkanäle 20 in den einzelnen Ebenen A1, A2,... C2, C3 der Einlaßstruktur 14 von der Eintrittsseite ausgehend, die neben dem Verteilkanal 24 liegt, über die Breite des Absorbers variiert; wie das dargestellte Beispiel zeigt, wird die Breite der Brückenkanäle 20 in der angegebenen Richtung größer, wodurch ein gleichmäßiger Mengendurchfluß in die Strömungskanäle 18 sichergestellt wird. In entsprechender Weise variiert auch der Durchströmquerschnitt der Brückenkanäle 20 in der Auslaßstruktur 16, der hier über die Absorberbreite in Richtung zur Austrittsseite in Höhe des Sammelkanals 26 abnimmt.

In Abhängigkeit von dem Werkstoff des Absorbergehäuses (Aluminium, Kunststoff oder dergleichen) und vom Betriebsdruck im Absorber beträgt die maximale Kanalbreite etwa 20 mm.

Mit der erläuterten Kanalgeometrie gemäß der Erfindung, die eine Optimierung hinsichtlich des Strömungsverhaltens darstellt, wird gegenüber dem Stand der Technik der erhebliche Vorteil realisiert, daß Totwassergebiete ohne Durchströmung und damit ohne Wärmeabfuhr vermieden werden und dass alle Steigkanäle 12 über die Absorberbreite gleichmäßig durchströmt werden.

## Patentansprüche

1. Wärmetauscher, insbesondere Absorber für thermische Solarkollektoren, mit einem in Kanäle unterteilten Hohlraum, die von einem Wärmeträger durchströmt sind, **dadurch gekenn-zeichnet, dass** eine Vielzahl paralleler Steigkanäle (12) mit nahezu gleichen Durchströmquer-schnitten in einem Endbereich des Hohlraums mit einer Einlaßstruktur (14) und im gegenüberliegenden Endbereich des Hohlraums mit einer Auslaßstruktur (16) verbunden ist, wobei sowohl die Einlaßstruktur als auch die Auslaßstruktur aus zueinander parallelen, zu den Steigkanälen (12) rechtwinklig verlaufenden Strömungskanälen (18) besteht, die durch quer dazu verlaufende Brückenkanäle (20) miteinander verbunden sind.

2. Wärmetauscher nach Anspruch 1, **dadurch gekennzeichnet, dass** die Einlaßstruktur (14) und die Auslaßstruktur (16) punktsymmetrisch zueinander ausgebildet sind.

3. Wärmetauscher nach Anspruch 1 oder 2, **dadurch gekennzeichnet, dass** die beiden äußeren Steigkanäle (12) gegenüber den inneren Steigkanälen (12) einen anderen, vorzugsweise größeren Durchflußquerschnitt haben.

4. Wärmetauscher nach Anspruch 2 oder 3, **dadurch gekennzeichnet, dass** sowohl die Einlaßstruktur (14) als auch die Auslaßstruktur (16) in mehrere Zonen (A, B, C bzw. D, E, F) unterteilt sind, die in Strömungsrichtung aufeinander folgen, wobei jede Zone gegenüber der anschließenden Zone eine andere Kanalgeometrie hat.

5. Wärmetauscher nach Anspruch 4, **dadurch gekennzeichnet, dass** sowohl die Einlaßstruktur (14) als auch die Auslaßstruktur (16) in drei Zonen (A, B, C bzw. D, E, F) unterteilt sind.

6. Wärmetauscher nach Anspruch 4 oder 5, **dadurch gekennzeichnet, dass** in der Einlaßstruktur (14) die Anzahl der Brückenkanäle (20) in den Zonen mit wachsender Zonenzahl steigt, während sie in der Auslaßstruktur (16) mit der Zahl der Zonen in Strömungsrichtung kleiner wird.

7. Wärmetauscher nach einem der Ansprüche 4 bis 6, **dadurch gekennzeichnet, dass** jede Zone mehrere, vorzugsweise drei durch die Brückenkanäle (20) definierte Ebenen hat.

8. Wärmetauscher nach Anspruch 7, **dadurch gekennzeichnet, dass** in der ersten und in der dritten Ebene jeder Zone die Anzahl der Brückenkanäle (20) gleich ist, während in der mittleren Zone ein Brückenkanal (20) mehr oder weniger vorhanden ist.

9. Wärmetauscher nach Anspruch 7 oder 8, **dadurch gekennzeichnet, dass** der Durchströmquerschnitt der Brückenkanäle (20) in den einzelnen Ebenen der Einlaßstruktur (14) von der Eintrittsseite über die Breite des Absorbers variiert, vorzugsweise zunimmt.

10. Wärmetauscher nach Anspruch 7 oder 8, **dadurch gekennzeichnet, dass** der Durchströmquerschnitt der Brückenkanäle (20) in den einzelnen Ebenen der Auslaßstruktur (16) zur Austrittseite über die Breite des Absorbers variiert, vorzugsweise abnimmt.

11. Wärmetauscher nach einem der Ansprüche 7 bis 10, **dadurch gekennzeichnet, dass** bei drei Zonen in der Einlaßstruktur (14) und in der Auslaßstruktur (16) die erste Zone (A) der Einlaßstruktur (14) und die letzte Zone (F) der Auslaßstruktur (16) eine Brückenkanalzahlfolge von 6, 5, 6 hat, die jeweils mittlere Zone (B, E) eine Brückenkanalzahlfolge von 10, 11, 10 und die beiden verbleibenden Zonen (C, D), die einen Anschluss an die Steigkanäle (12) bilden, eine Brückenkanalzahlfolge von 20, 21, 20.

12. Wärmetauscher nach einem der vorhergehenden Ansprüche, **dadurch gekennzeichnet, dass** die maximale Kanalbreite 20 mm beträgt.

13. Wärmetauscher nach einem der vorhergehenden Ansprüche, **dadurch gekennzeichnet, dass** dieser aus zwei im Roll-Bond-Verfahren miteinander verbundenen Platten aus Metall besteht.

14. Wärmetauscher nach einem der Ansprüche 1 bis 12, **dadurch gekennzeichnet, dass** der Hohlraum in einem Polymerkörper ausgebildet ist.
